# EUROPEAN PATENT SPECIFICATION

(11) **EP 3 910 523 B1**
(45) Date of publication and mention of the grant of the patent: **16.07.2025**
(21) Application number: 21163962.0
(22) Date of filing: 22.03.2021
(51) Int. Cl.: G06N 3/084

(54) **MACHINE LEARNING PROGRAM, METHOD AND DEVICE FOR ESTIMATING THE ELECTROMAGNETIC WAVE RADIATION SITUATION OF AN ELECTRONIC CIRCUIT**
MASCHINELLES LERNPROGRAMM, VERFAHREN UND VORRICHTUNG ZUR SCHÄTZUNG DER ABSTRAHLUNGSSITUATION ELEKTROMAGNETISCHER WELLEN EINER ELEKTRONISCHEN SCHALTUNG
PROGRAMME, PROCEDE ET DISPOSITIF D'APPRENTISSAGE AUTOMATIQUE POUR ESTIMER LA SITUATION DE RAYONNEMENT D'ONDES ELECTROMAGNETIQUES D'UN CIRCUIT ELECTRONIQUE

(30) Priority: 12.05.2020 JP 2020084147
(43) Date of publication of application: 17.11.2021
(73) Proprietor: Fujitsu Limited, Kawasaki-shi, Kanagawa 211-8588 (JP)
(72) Inventor: Yamada, Hiroaki, Kawasaki-shi, Kanagawa 211-8588 (JP); Yamane, Shohei, Kawasaki-shi, Kanagawa 211-8588 (JP); Kochibe, Yoichi, Kawasaki-shi, Kanagawa 211-8588 (JP); Yamazaki, Takashi, Kawasaki-shi, Kanagawa 211-8588 (JP); Oishi, Yusuke, Kawasaki-shi, Kanagawa 211-8588 (JP); Ohara, Toshiyasu, Kawasaki-shi, Kanagawa 211-8588 (JP)
(74) Representative: Hoffmann Eitle

(56) References cited:
- JIN HANG ET AL: "EMI Radiation Prediction and Structure Optimization of Packages by Deep Learning", IEEE ACCESS, vol. 7, 10 July 2019 (2019-07-10), pages 93772 - 93780, XP011736497, DOI: 10.1109/ACCESS.2019.2927160
- JIN HANG ET AL: "Machine learning for complex EMI prediction, optimization and localization", 2017 IEEE ELECTRICAL DESIGN OF ADVANCED PACKAGING AND SYSTEMS SYMPOSIUM (EDAPS), IEEE, 14 December 2017 (2017-12-14), pages 1 - 3, XP033308279, DOI: 10.1109/EDAPS.2017.8276967
- YAO S ET AL: "An Equivalent Radiation Source Based on Artificial Neural Network for EMI Prediction", 2018 INTERNATIONAL SYMPOSIUM ON ELECTROMAGNETIC COMPATIBILITY (EMC EUROPE), IEEE, 27 August 2018 (2018-08-27), pages 556 - 560, XP033416235, DOI: 10.1109/EMCEUROPE.2018.8485100

## Description

### FIELD

The embodiment discussed herein is related to a machine learning estimation program, a machine learning estimation method, and an information processing device.

### BACKGROUND

In recent years, estimation of an electromagnetic wave radiation situation (EMI), which is radiated from a circuit, is performed using a machine learning technology such as deep learning (DL). The electromagnetic wave radiation situation indicates a situation of a far electromagnetic field, and is also referred to as a far field. For example, in an estimation method by using the DL, the electromagnetic wave radiation situation is estimated based on an electronic circuit to be analyzed, by using a learning model generated from learning data in which a learning electronic circuit and a simulation result of electromagnetic wave analysis for the electronic circuit are paired.

The following documents are relevant prior art: JIN HANG ET AL: "EMI Radiation Prediction and Structure Optimization of Packages by Deep Learning" (DOI: 10.1109/ACCESS.2019.2927160); JIN HANG ET AL: "Machine learning for complex EMI prediction, optimization and localization" (DOI: 10.1109/EDAPS.2017.8276967); YAO S ET AL: "An Equivalent Radiation Source Based on Artificial Neural Network for EMI Prediction" (DOI: 10.1109/EMCEUROPE.2018.8485100). Other related techniques are disclosed in, for example, Japanese National Publication of International Patent Application No. 2009-534854.

However, in the related art described above, a situation of a near electromagnetic field (near field) generated by various values of elements including an inductor (L), a capacitor (C), and a resistor (R) may not be accurately approximated, and thus there is a problem in that it is difficult to accurately estimate a far field in some cases.

For example, in a case where the values of L, C, and R are sufficiently large, reflection occurs due to the L, C, and R elements (hereinafter, referred to as an LCR element). Therefore, in a case where the circuit is regarded as two lines obtained by being cut at the LCR element, the near field may be approximated based on a total length of the respective lines. However, a case where the values of L, C, and R are small and the reflection is small is exactly the same as a case where the LCR element is not present, so that it is difficult to accurately approximate an approximation field.

In one aspect, an object is to provide an estimation technique which may support accurate estimation of an electromagnetic wave radiation situation.

### SUMMARY

According to an aspect of the embodiment, a machine learning estimation program causes a computer to execute a process, the process comprising identifying, for an electronic circuit to be analyzed, a resonance frequency of a current and a spatial distribution of the current that flows through the electronic circuit to be analyzed at the resonance frequency, generating a machine learning model using a training data set in which arrangements of circuit elements in respective electronic circuits differ from each other, the training data set being a set of training data in each of which a specific value of a resonance frequency for a specific electronic circuit and information of a spatial distribution of a current that flows through the specific electronic circuit at the resonance frequency of the specific value are used as input data and an electromagnetic wave radiation situation of the specific electronic circuit is set as a label, inputting, as input data, a frequency value of the identified resonance frequency and information of the identified spatial distribution to the generated machine learning model, and estimating an electromagnetic wave radiation situation of the electronic circuit to be analyzed, based on an output from the machine learning model according to the inputting.

According to an aspect of the embodiment, accurate estimation of an electromagnetic wave radiation situation may be supported.

### BRIEF DESCRIPTION OF DRAWINGS

FIG. 1 is an explanatory diagram for explaining an overview of a learning phase and an estimation phase according to an embodiment;
FIG. 2 is a block diagram illustrating an example of a functional configuration of an information processing device according to the embodiment;
FIG. 3 is a flowchart illustrating an example of an operation of the information processing device according to the embodiment;
FIG. 4 is a flowchart illustrating an example of input data generation processing;
FIG. 5 is an explanatory diagram for explaining an overview of the input data generation processing;
FIG. 6 is an explanatory diagram for explaining a case where division is performed on current distribution;
FIG. 7 is an explanatory diagram for explaining an example of estimation by using circuit information;
FIG. 8 is an explanatory diagram for explaining verification of an estimation result; and
FIG. 9 is a block diagram illustrating an example of a configuration of a computer.

### DESCRIPTION OF EMBODIMENT

Hereinafter, an estimation technique according to an embodiment will be described with reference to the accompanying drawings. In the embodiment, the same reference numeral is attached to a component having the same function, and the description thereof will not be repeated. The estimation program, the model generation program, the estimation method, the model generation method, the estimation device, and the model generation device, which will be described in the embodiment below, are merely examples and do not limit the embodiment. Further, the embodiment below may be appropriately combined in a scope which is not inconsistent.

First, an overview of the present embodiment, in which an electromagnetic wave radiation situation (EMI intensity) in an electronic circuit to be analyzed, will be described. One point of interest in the present embodiment is that a far field of electromagnetic wave radiation in the electronic circuit to be analyzed is determined by an approximation field, and a near field is determined by a current flowing through the circuit.

For example, in the electronic circuit, wiring serves as an antenna to generate an electromagnetic field, and a part of energy of the electromagnetic field is radiated as the EMI. An intensity of the electromagnetic field is determined by the amount of current flowing through the wiring. Therefore, the near field may be approximated by using a spatial distribution (hereinafter, also referred to as a current distribution) of the current flowing through the electronic circuit to be analyzed.

The current flowing through the electronic circuit differs for each frequency. For example, the current distribution has a distribution over the frequency. However, in a case where machine learning is performed on a relationship between the current distributions at all frequencies and the EMI intensity, there is a problem in that the number of pieces of data to be learned becomes unrealistic.

In circuit design, there is an interest in reducing a peak of an EMI spectrum. The peak of the EMI spectrum is obtained as a frequency at which a maximum value of the current distribution is the highest. A peak frequency is referred to as a resonance frequency.

Therefore, another point of interest in the present embodiment is to perform machine learning by focusing on the current distribution at the resonance frequency. For example, in a learning phase, a value of the resonance frequency of the electronic circuit and the current distribution of the electronic circuit at the resonance frequency are set as feature quantities, and the machine learning is performed on a relationship of the EMI intensity with respect to the feature quantities, so that an estimation model is generated. In an estimation phase, the value of the resonance frequency and the current distribution at the resonance frequency are identified for the electronic circuit to be analyzed, and the value of the identified resonance frequency and the current distribution are input to the estimation model, so that the estimated value of the EMI intensity is obtained based on the output from the estimation model.

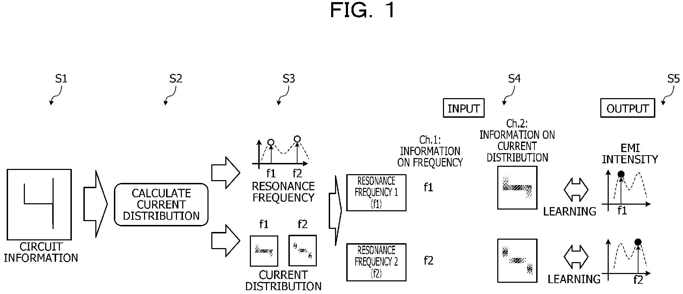

FIG. 1 is an explanatory diagram for explaining an overview of the learning phase and the estimation phase according to the embodiment. As illustrated in FIG. 1, in the learning phase, circuit information in an electronic circuit of each case is acquired from a training data set including cases to be learned in which arrangements of circuit elements in the electronic circuit differ from each other (S1). The circuit information includes, for example, information on a circuit network (for example, a network list) of the circuit element (LCR element) included in the electronic circuit, a physical property value (a resistance value, inductance, or electrostatic capacitance) of each circuit element, and the like.

Next, in the learning phase, based on the circuit information, the current distribution at each frequency in the electronic circuit is calculated by a circuit simulator such as a simulation program with integrated circuit emphasis (SPICE) (S2).

In order to approximate the near field of the electronic circuit, an output in S2 is an image on which coloring processing is performed such that the color becomes lighter as being far away from lines based on intensity information of the current distribution. For example, the output in S2 is information (image information) indicating an intensity of the current distribution that approximates the near field of the electronic circuit. The current distribution over a two-dimensional circuit has a smaller amount of calculation, compared to a three-dimensional electromagnetic field, so that the current distribution may be calculated in a much short time.

Next, in the learning phase, a resonance frequency (f1, f2) at which the maximum value of the calculated current distribution is the highest is identified, and the current distribution for each resonance frequency (f1, f2) is obtained (S3).

Next, in the learning phase, information on the identified frequency (value of the resonance frequency) is input as input data of a channel 1 (Ch. 1), and information on the current distribution at the frequency (image indicating the current distribution) is input as input data of a channel 2 (Ch. 2) to the estimation model such as deep learning (S4). For example, in S4, the resonance frequency (f1) is input to the estimation model as Ch. 1, and the current distribution at the resonance frequency (f1) is input to the estimation model as Ch. 2. Alternatively, the resonance frequency (f2) is input to the estimation model as Ch. 1, and the current distribution at the resonance frequency (f2) is input to the estimation model as Ch. 2.

Next, in the learning phase, parameters of the estimation model are learned (learned by using an error back propagation method) so that the output from the estimation model for the inputs of Ch. 1 and Ch. 2 approaches a correct answer label (EMI intensity) included in the training data set (S5).

In the estimation phase, instead of the circuit information of the electronic circuit to be learned, the circuit information of the electronic circuit to be analyzed is acquired and the processes in S1 to S4 are performed.

For example, in the estimation phase, the circuit information in the electronic circuit to be analyzed is acquired by an input from a user, or the like (S1). Next, in the estimation phase, based on the circuit information, the current distribution at each frequency in the electronic circuit is calculated by the circuit simulator such as SPICE (S2). Next, in the estimation phase, the resonance frequency (f1, f2) at which the maximum value of the calculated current distribution is the highest is identified, and the current distribution for each resonance frequency (f1, f2) is obtained (S3).

Next, in the estimation phase, the information on the identified frequency (the value of the resonance frequency) is input as the input data of the channel 1 (Ch. 1), and the information on the current distribution at the frequency (the image indicating the current distribution) is input as the input data of the channel 2 (Ch. 2) to the estimation model such as the deep learning (S4). Thus, in the estimation phase, the estimated value of the EMI intensity is obtained based on the output from the estimation model (S5).

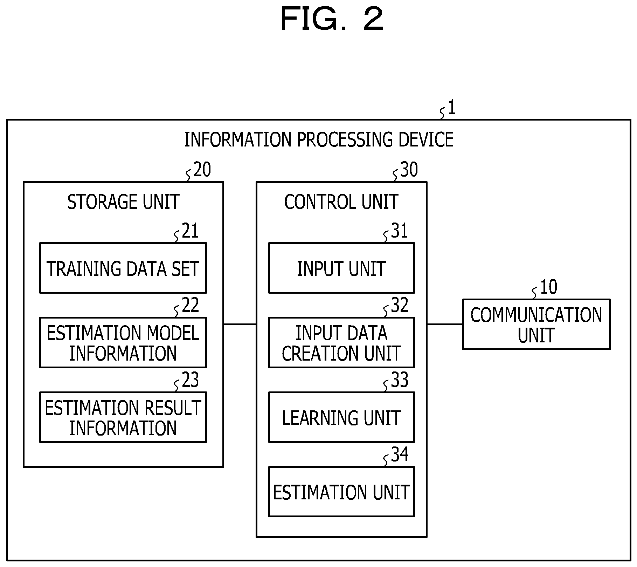

FIG. 2 is a block diagram illustrating an example of a functional configuration of the information processing device according to the embodiment. As illustrated in FIG. 2, the information processing device 1 is a computer that includes a communication unit 10, a storage unit 20, and a control unit 30, and that executes the learning phase and the estimation phase which are described above. For example, a personal computer (PC) or the like may be applied to the information processing device 1. For example, the information processing device 1 is an example of an estimation device or a model generation device.

The communication unit 10 communicates with input devices, such as a keyboard and a mouse, and other information processing devices via a LAN, a communication cable, or the like under the control of the control unit 30. The information processing device 1 receives, for example, an input of a training data set 21 for training the estimation model and an input of circuit information of the electronic circuit to be analyzed via the communication unit 10.

The storage unit 20 is, for example, a semiconductor memory element, such as a random-access memory (RAM) or a flash memory, or a storage device such as a hard disk or an optical disk. The storage unit 20 includes the training data set 21, estimation model information 22, and estimation result information 23.

The training data set 21 is a data set of training data including cases to be learned in which the arrangements of the circuit elements in the electronic circuit differ from each other. For example, the training data of the training data set 21 includes the circuit information and the correct answer label (EMI intensity) in each case.

The estimation model information 22 is a parameter or the like for constructing a machine learning model (estimation model) generated by the machine learning.

The estimation result information 23 is an estimation result obtained by using the estimation model of the estimation model information 22 for the circuit information of the electronic circuit to be analyzed. For example, the estimation result information 23 is a value of the EMI intensity for each resonance frequency in the electronic circuit to be analyzed.

The control unit 30 corresponds to the electronic circuit such as a central processing unit (CPU). The control unit 30 includes an internal memory for storing programs defining various processing procedures and control data, and executes various processing by using the programs and the control data.

For example, the control unit 30 includes an input unit 31, an input data creation unit 32, a learning unit 33, and an estimation unit 34. The input data creation unit 32 is an example of an identification unit or an acquisition unit. The learning unit 33 is an example of a model generation unit.

The input unit 31 is a processing unit that receives input of various information such as the training data set 21 and the circuit information of the electronic circuit to be analyzed. For example, the input unit 31 stores the training data set 21 input via the communication unit 10 in the storage unit 20. The input unit 31 outputs the circuit information of the electronic circuit to be analyzed input via the communication unit 10 to the input data creation unit 32.

The input data creation unit 32 is a processing unit that generates the input data to be input to the estimation model. For example, the input data creation unit 32 calculates the current distribution at each frequency in the electronic circuit by the circuit simulator such as SPICE based on the circuit information. Next, the input data creation unit 32 identifies the resonance frequency at which the maximum value of the calculated current distribution is the highest, and identifies the current distribution for each resonance frequency. Next, the input data creation unit 32 generates the input data in which the identified resonance frequency is set to Ch. 1 and the current distribution at the resonance frequency is set to Ch. 2.

The learning unit 33 is a processing unit that learns the parameters of the estimation model by the machine learning (learning by using the error back propagation method). For example, the learning unit 33 learns the parameters of the estimation model such that the output from the estimation model for the input data (Ch. 1: the value of the resonance frequency, Ch. 2: the current distribution at the resonance frequency) generated by the input data creation unit 32 for the case to be learned approaches the correct answer label (EMI intensity) of the case. Next, the learning unit 33 stores the parameters of the estimation model obtained by the learning in the storage unit 20 as the estimation model information 22.

The estimation unit 34 is a processing unit that estimates the electromagnetic wave radiation situation in the electronic circuit to be analyzed by using the estimation model generated by the machine learning of the learning unit 33. For example, the estimation unit 34 inputs the input data (Ch. 1: the value of the resonance frequency, Ch. 2: the current distribution at the resonance frequency) generated by the input data creation unit 32 for the electronic circuit to be analyzed to the estimation model based on the estimation model information 22. Next, the estimation unit 34 obtains the estimated value (estimation result) of the EMI intensity based on the output from the estimation model according to the input. Next, the estimation unit 34 stores the obtained estimation result in the storage unit 20 as the estimation result information 23, together with, for example, the electronic circuit to be analyzed.

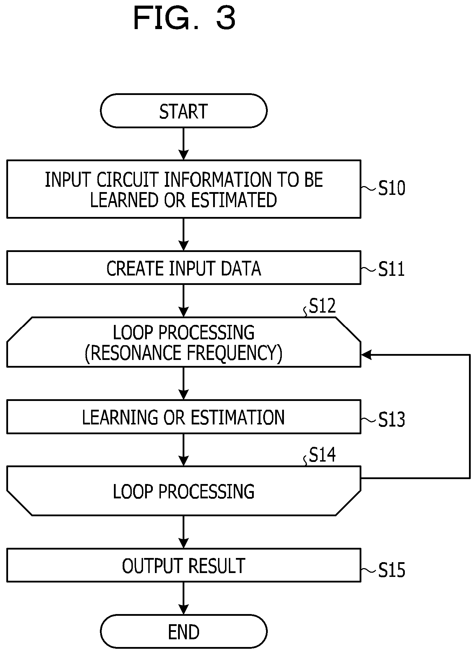

FIG. 3 is a flowchart illustrating an example of an operation of the information processing device according to the embodiment. As illustrated in FIG. 3, in a case where the processing is started, the input unit 31 receives input of the circuit information to be learned or estimated via the communication unit 10 or the like (S10).

Next, based on the circuit information to be learned or estimated, the input data creation unit 32 creates the input data (Ch. 1: the value of the resonance frequency, Ch. 2: the current distribution at the resonance frequency) to be input to the estimation model (S11).

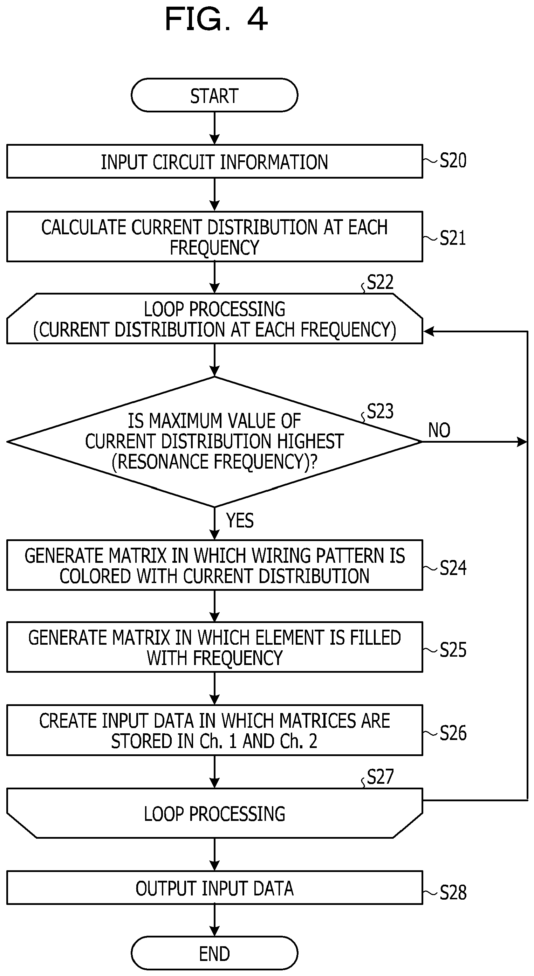

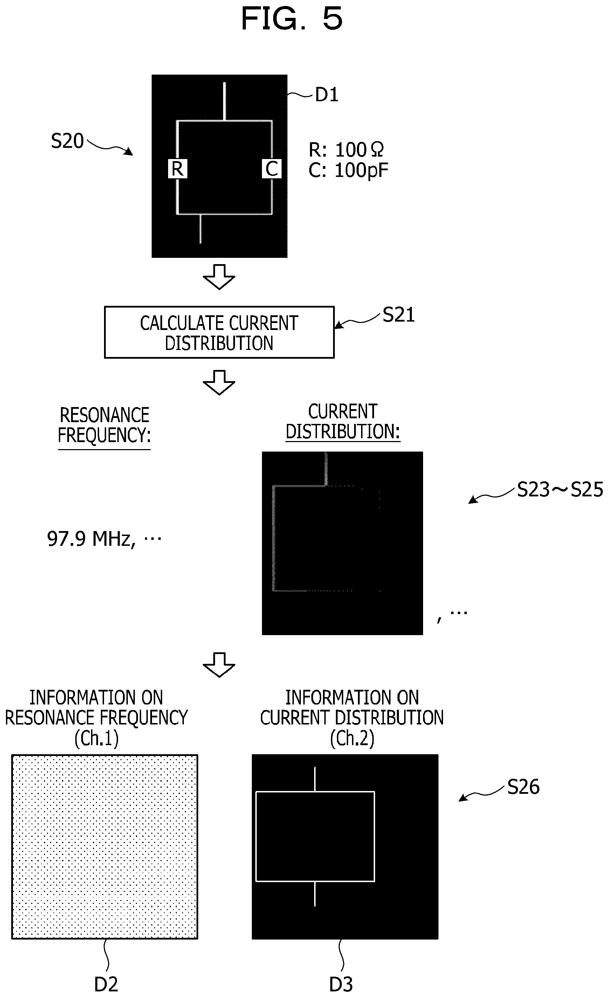

FIG. 4 is a flowchart illustrating an example of input data generation processing. FIG. 5 is an explanatory diagram for explaining an overview of the input data generation processing.

As illustrated in FIG. 4, in a case where the input data generation processing is started, the input data creation unit 32 receives the input of the circuit information which is a processing target of the learning or the estimation (S20), and calculates the current distribution over the circuit at each frequency by using the circuit simulator such as SPICE (S21).

For example, in the example of FIG. 5, in S20, circuit information D1 of the electronic circuit, in which the circuit elements of R (100 Ω) and C (100 pF) are coupled in parallel, is input. The input data creation unit 32 calculates the current distribution at each frequency by the circuit simulator (for example, SPICE) based on the circuit information D1.

Next, the input data creation unit 32 executes loop processing (S22 to S27) in the current distribution at each frequency.

For example, in a case where the loop processing is started, the input data creation unit 32 determines whether or not the maximum value of the current distribution is the highest (resonance frequency) (S23). In a case where the frequency is not the resonance frequency (S23: No), the input data creation unit 32 returns the process to S22, and continues the loop processing related to the current distribution at a subsequent frequency.

In a case where the frequency is the resonance frequency (S23: Yes), the input data creation unit 32 generates a two-dimensional matrix, in which a wiring pattern of the electronic circuit is colored with the current distribution in order to approximate the near field, for example, an image indicating the current distribution (S24).

Next, the input data creation unit 32 generates a matrix filled with the elements using the resonance frequency (S25). For example, the input data creation unit 32 creates a matrix having the same size as the matrix generated in S24, and assigns the value of the resonance frequency to each of the elements of the matrix.

In a case where a plurality of channels (Ch. 1 and Ch. 2) are input to the estimation model, types of the matrices of the respective channels are demanded to be the same. Therefore, in S25, in a case where scalar (the value of the resonance frequency) is converted into the matrix, handling as a standard neural network model (estimation model) is possible.

As illustrated in FIG. 5, in S23 to S25, the input data creation unit 32 obtains the matrix filled with the value of the resonance frequency and an image (matrix) of the current distribution at the resonance frequency.

Next, the input data creation unit 32 creates input data in which the two matrices in S24 and S25 are stored in Ch. 1 and Ch. 2 (S26). For example, as illustrated in FIG. 5, the input data creation unit 32 creates input data D2 of Ch. 1 relating to information (matrix) on the resonance frequency and input data D3 of Ch. 2 relating to information (matrix) on the current distribution at the resonance frequency. Next, the input data creation unit 32 returns the process to S22 until processing for the current distribution at all the frequencies is completed, and continues the loop processing.

After the loop processing, the input data creation unit 32 outputs the input data D2 and D3 to be input to the estimation model to the learning unit 33 or the estimation unit 34 (S28).

Returning to FIG. 3, the information processing device 1 executes estimation using learning of the estimation model and learned estimation model by performing the loop processing (S12 to S14) for the input data D2 and D3 created by the input data creation unit 32 for each resonance frequency.

For example, in a case of the learning (learning phase) of the estimation model based on the circuit information of the electronic circuit to be learned, the learning unit 33 learns the parameters such that the output from the estimation model for the input data D2 (Ch. 1: the value of the resonance frequency) and the input data D3 (Ch. 2: the current distribution at the resonance frequency) approaches the correct answer label.

In a case of the estimation (estimation phase) based on the circuit information of the electronic circuit to be analyzed, the estimation unit 34 obtains an estimated value (estimation result) of the EMI intensity by using the output from the estimation model for the input data D2 (Ch. 1: the value of the resonance frequency) and the input data D3 (Ch. 2: the current distribution at the resonance frequency).

Next, the information processing device 1 outputs a result of the estimation or the learning (S15). For example, in a case of the learning phase, the learning unit 33 stores the parameters of the estimation model, which are obtained by the learning, in the storage unit 20 as the estimation model information 22. In a case of the estimation phase, the estimation unit 34 stores the estimation result information 23, which includes the obtained estimation result, in the storage unit 20.

In the learning phase, the information processing device 1 learns the estimation model with the training data set 21 having a simple circuit configuration using LCR elements. In the estimation phase, the information processing device 1 inputs, to the estimation model, a result of division performed on the current distributions for each configuration of the circuit element included in the electronic circuit to be analyzed. Next, the information processing device 1 may estimate the electromagnetic wave radiation situation of the electronic circuit to be analyzed by adding the output from the estimation model.

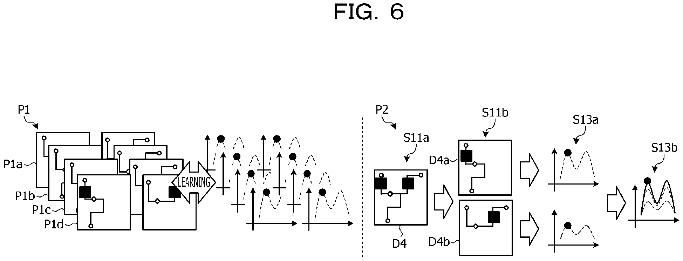

FIG. 6 is an explanatory diagram for explaining a case where the division is performed on the current distribution. As illustrated in FIG. 6, in a learning phase P1, the information processing device 1 learns the estimation model using learning cases P1a, P1b, P1c, P1d ... having a simple circuit configuration.

For example, the learning case P1a is a case of the current distribution and a correct answer label (EMI intensity at the resonance frequency) in a case where the circuit configuration does not include an element. Similarly, the learning case P1b is a case of a circuit configuration of C: 10 pF, the learning case P1c is a case of a circuit configuration of C: 100 pF, and the learning case P1d is a case of a circuit configuration of R: 100 Ω.

In an estimation phase P2, the input data creation unit 32 identifies a current distribution D4 at the resonance frequency (S11a). With respect to the identified current distribution D4, the estimation unit 34 performs division on the current distribution for each configuration of the circuit element included in the electronic circuit (S11b). For example, the estimation unit 34 performs division on the current distribution D4 at a point of a circuit branch in the circuit information, and obtains current distributions D4a and D4b.

Next, the estimation unit 34 individually inputs the obtained current distributions D4a and D4b to the estimation model to obtain respective outputs thereof (estimated values of the EMI intensity) (S13a). Next, the estimation unit 34 adds the obtained outputs (S13b) to estimate the electromagnetic wave radiation situation of the electronic circuit to be analyzed.

Accordingly, even in a case where the electronic circuit to be analyzed has a complex circuit configuration, the information processing device 1 may estimate the electromagnetic wave radiation situation by using the estimation model learned with the training data set 21 having the simple circuit configuration.

As described above, the information processing device 1 includes the input data creation unit 32 and the estimation unit 34. The input data creation unit 32 identifies, for the electronic circuit to be analyzed, the resonance frequency of the current and the spatial distribution (current distribution) of the current flowing through the electronic circuit to be analyzed at the resonance frequency. The estimation unit 34 inputs the value of the identified resonance frequency and the current distribution of the identified electronic circuit to be analyzed to the estimation model (machine learning model) of the estimation model information 22 as the input data. Next, the estimation unit 34 estimates the electromagnetic wave radiation situation of the electronic circuit to be analyzed based on the output from the machine learning model. The estimation model information 22 related to the machine learning model is generated by using the training data set in which the arrangements of the circuit elements in the electronic circuit differ from each other, the training data set being a set of the training data in which the value of the resonance frequency for the electronic circuit and the current distribution of the electronic circuit at the resonance frequency are used as the input data and the electromagnetic wave radiation situation of the electronic circuit is set as a label.

Therefore, in the information processing device 1, the spatial distribution (current distribution) of the current generated using various values of the LCR element included in the electronic circuit to be analyzed may be identified, and the near field of the electronic circuit to be analyzed may be accurately approximated. Therefore, in the information processing device 1, the electromagnetic wave radiation situation (EMI) in the electronic circuit to be analyzed may be estimated with high accuracy by using the machine learning model in which machine learning is performed on the electromagnetic wave radiation situation of the electronic circuit using the resonance frequency of the current in the electronic circuit and the current distribution at the resonance frequency as the feature quantities.

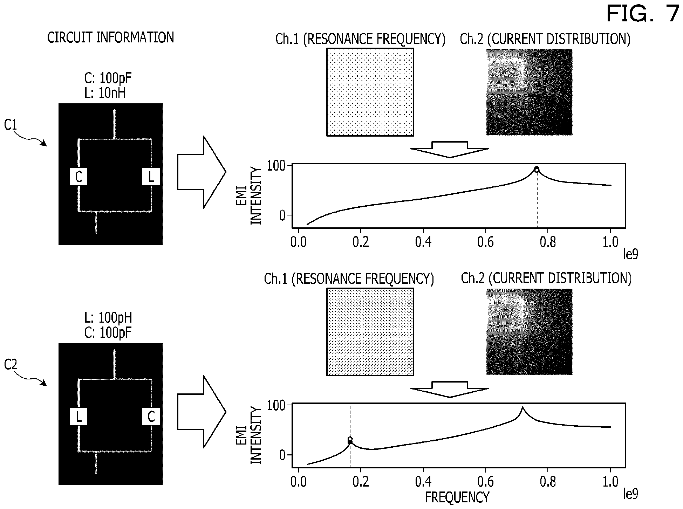

FIG. 7 is an explanatory diagram for explaining an example of the estimation by using the circuit information. For example, FIG. 7 illustrates an example of estimation of the EMI intensity by the information processing device 1 based on the circuit information of the electronic circuit to be analyzed. In FIG. 7, a solid line graph indicates a correct answer of the EMI intensity (EMI spectrum) at each frequency. A dotted line indicates the resonance frequency. A black dot indicates the correct answer of the EMI intensity at the resonance frequency, and a white dot indicates an estimated value of the EMI intensity by the information processing device 1.

A case C1 and a case C2 have the same circuit configuration, but values of the circuit elements thereof are different from each other. For example, in the case C1, C: 100 pF and L: 10 nH, and, in the case C2, C: 100 pF and L: 100 pH. For example, the case C2 is a case where the value of L is smaller and the reflection is smaller.

As illustrated in FIG. 7, in the information processing device 1, based on the circuit information in the electronic circuit to be analyzed, the resonance frequency and the current distribution generated using the various values of the LCR element at the resonance frequency are identified as the feature quantities of the electronic circuit to be analyzed. Therefore, for example, as in the case C2, even in a case where the value of L is sufficiently small and thus the reflection is small, the near field may be accurately approximated. Therefore, as the same as in the case C1, also in the case C2, the EMI intensity may be accurately estimated by estimating the EMI intensity by using the machine learning model based on the identified feature quantity.

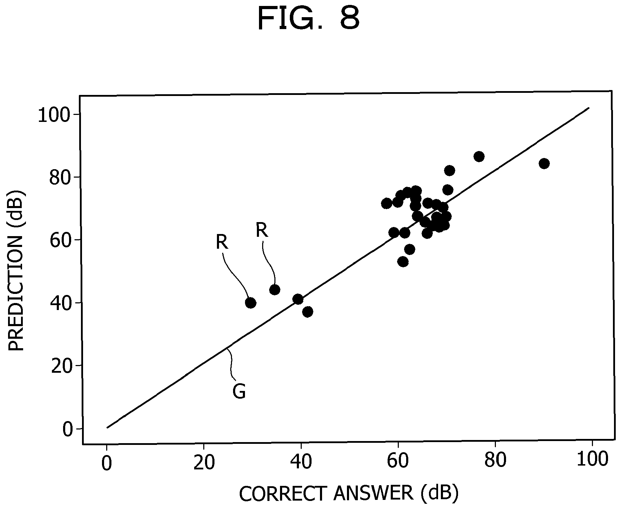

FIG. 8 is an explanatory diagram for explaining verification of the estimation result. For example, FIG. 8 illustrates a verification result by using a holdout method for the estimation of the EMI intensity by the information processing device 1 using the machine learning model by 5000 epoch learning. As illustrated in FIG. 8, an estimation result R of the information processing device 1 is close to a correct answer graph G and may be estimated with high accuracy.

The input data creation unit 32 identifies the frequency, at which the maximum value of the current distribution of the electronic circuit to be analyzed is the highest, as the resonance frequency. Therefore, in the information processing device 1, the electromagnetic wave radiation situation (EMI intensity) may be estimated at the resonance frequency at which the maximum value of the current distribution is the highest in the electronic circuit to be analyzed. In circuit design, there is an interest in reducing the peak of the EMI spectrum. Therefore, it is sufficient in a case where the peak EMI intensity (the maximum value of the current distribution is the highest) may be predicted.

The input data creation unit 32 identifies the resonance frequency and the current distribution for the electronic circuit to be analyzed by using the circuit simulator. Thus, in the information processing device 1, for example, the resonance frequency and the current distribution may be identified in the electronic circuit to be analyzed by the circuit simulator such as SPICE.

The estimation unit 34 inputs, to the machine learning model, the value of the identified resonance frequency and the current distribution obtained through division performed on the identified current distribution of the electronic circuit to be analyzed for each configuration of the circuit element included in the electronic circuit as the input data. Next, the estimation unit 34 estimates the electromagnetic wave radiation situation of the electronic circuit to be analyzed by adding the output from the machine learning model according to the input of the current distributions obtained through division for each configuration of the circuit element. Accordingly, even in the case where the electronic circuit to be analyzed has the complex circuit configuration, the information processing device 1 may estimate the electromagnetic wave radiation situation by using the machine learning model in which machine learning is performed with the training data having the simple circuit configuration.

Note that, each of the components of each of the devices illustrated in the drawing is not demanded to be physically configured as illustrated in the drawing. For example, specific forms of the separation and integration of each of the devices are not limited to the illustrated drawing. All or some of the devices may be functionally or physically separated and integrated in an arbitrary unit according to various loads, usage situations, and the like.

The information processing device 1 may include one of a configuration (the input unit 31, the input data creation unit 32, and the learning unit 33) that executes the learning phase and a configuration (the input unit 31, the input data creation unit 32, and the estimation unit 34) that executes the estimation phase. For example, learning of the estimation model and estimation using the learned estimation model may be performed by different information processing devices.

All or some of the various processing functions performed in the information processing device 1 may be executed over the CPU (or a microcomputer such as a microprocessor unit (MPU) or a micro controller unit (MCU)) or a graphics processing unit (GPU). Further, it is apparent that all or some of the various processing functions may be executed over programs, which are analyzed and executed by the CPU (or the microcomputer such as the MPU or the MCU) or the GPU, or over hardware by using a wired logic. The various processing functions performed in the information processing device 1 may be executed in such a way that a plurality of computers cooperate via cloud computing.

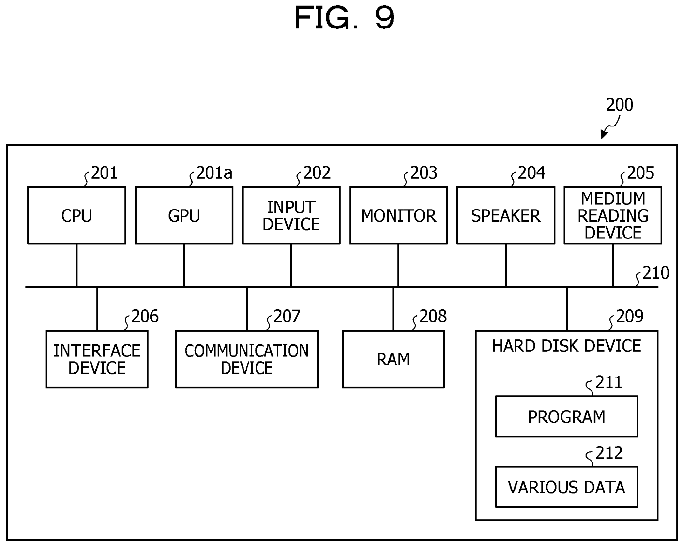

The various processing described in the embodiment may be realized in such a way that the computer executes a program prepared in advance. Hereinafter, an example of the computer (hardware) that executes the program having the same function as in the above-described embodiment will be described below. FIG. 9 is a block diagram illustrating an example of a configuration of the computer.

As illustrated in FIG. 9, a computer 200 includes a CPU 201 that executes various arithmetic processing, a GPU 201a that is specialized for predetermined arithmetic processing such as the image processing or the machine learning processing, an input device 202 that receives data input, a monitor 203, and a speaker 204. The computer 200 also includes a medium reading device 205 that reads a program or the like from a storage medium, an interface device 206 that couples various devices, and a communication device 207 that performs communication coupling with an external device in wired or wireless manner. The computer 200 also includes a RAM 208 that temporarily stores various information, and a hard disk device 209. Each of the units (201 to 209) in the computer 200 is coupled to a bus 210.

The hard disk device 209 stores programs 211 for executing various processing in the input unit 31, the input data creation unit 32, the learning unit 33, the estimation unit 34, and the like which are described in the embodiment. The hard disk device 209 stores various data 212 such as the training data set 21 and the estimation model information 22 to which the programs 211 refers. The input device 202 receives input of operation information from, for example, an operator. The monitor 203 displays various screens operated by, for example, the operator. For example, a printer or the like is coupled to the interface device 206. The communication device 207 is coupled to a communication network such as a local area network (LAN), and exchanges various information with the external device via the communication network.

The CPU 201 or the GPU 201a reads the programs 211 stored in the hard disk device 209 and deploys and executes the programs 211 in the RAM 208, thereby performing various processing related to the input unit 31, the input data creation unit 32, the learning unit 33, the estimation unit 34, and the like. The programs 211 may not be stored in the hard disk device 209. For example, the programs 211 stored in the storage medium, which is readable by the computer 200, may be read and executed. The storage medium which is readable by the computer 200 corresponds to, for example, a portable recording medium, such as a compact disc read-only memory (CD-ROM), a Digital Versatile Disc (DVD), or a Universal Serial Bus (USB) memory, a semiconductor memory such as a flash memory, a hard disk drive, or the like. The programs 211 may be stored in a device coupled to a public network, the Internet, a LAN, or the like, and the computer 200 may read and execute the programs 211 from the device.

## Claims

1. A machine learning estimation program that causes a computer to execute a process, the process comprising:
identifying, for an electronic circuit to be analyzed, a resonance frequency of a current and a spatial distribution of the current that flows through the electronic circuit to be analyzed at the resonance frequency;
generating a machine learning model using a training data set in which arrangements of circuit elements in respective electronic circuits differ from each other, the training data set being a set of training data in each of which a specific value of a resonance frequency for a specific electronic circuit and information of a spatial distribution of a current that flows through the specific electronic circuit at the resonance frequency of the specific value are used as input data and an EMI of the specific electronic circuit is set as a label;
inputting, as input data, a frequency value of the identified resonance frequency and information of the identified spatial distribution to the generated machine learning model; and
estimating, for circuit design, an EMI of the electronic circuit to be analyzed, based on an output from the machine learning model according to the inputting.

2. The machine learning estimation program according to claim 1, wherein
the identifying includes identifying, as the resonance frequency, a frequency at which a maximum value of the spatial distribution of the current that flows through the electronic circuit to be analyzed is highest.

3. The machine learning estimation program according to claim 1 or 2, wherein
the identifying includes identifying the resonance frequency and the spatial distribution for the electronic circuit to be analyzed by using a circuit simulator.

4. The machine learning estimation program according to any one of claims 1 to 3, the process further comprising:
dividing the identified spatial distribution into several spatial distributions in accordance with configurations of respective circuit elements included in the electronic circuit to be analyzed,
wherein
the inputting includes inputting, as the input data, the value of the identified resonance frequency and each of the several spatial distributions to the machine learning model, and
the estimating includes estimating the EMI of the electronic circuit to be analyzed by adding the output from the machine learning model according to the input of each of the several spatial distributions.

5. A machine learning estimation method for analyzing electronic circuits, the machine learning estimation method comprising:
identifying by a computer, for an electronic circuit to be analyzed, a resonance frequency of a current and a spatial distribution of the current that flows through the electronic circuit to be analyzed at the resonance frequency;
generating a machine learning model using a training data set in which arrangements of circuit elements in respective electronic circuits differ from each other, the training data set being a set of training data in each of which a specific value of a resonance frequency for a specific electronic circuit and information of a spatial distribution of a current that flows through the specific electronic circuit at the resonance frequency of the specific value are used as input data and an EMIof the specific electronic circuit is set as a label;
inputting, as input data, a frequency value of the identified resonance frequency and information of the identified spatial distribution to the generated machine learning model; and
estimating, for circuit design, an EMI of the electronic circuit to be analyzed, based on an output from the machine learning model according to the inputting.

6. The machine learning estimation method according to claim 5, wherein the identifying includes identifying, as the resonance frequency, a frequency at which a maximum value of the spatial distribution of the current that flows through the electronic circuit to be analyzed is highest.

7. The machine learning estimation method according to claim 5 or 6, wherein
the identifying includes identifying the resonance frequency and the spatial distribution for the electronic circuit to be analyzed by using a circuit simulator.

8. The machine learning estimation method according to any one of claims 5 to 7, further comprising:
dividing the identified spatial distribution into several spatial distributions in accordance with configurations of respective circuit elements included in the electronic circuit to be analyzed,
wherein
the inputting includes inputting, as the input data, the value of the identified resonance frequency and each of the several spatial distributions to the machine learning model, and
the estimating includes estimating the EMIof the electronic circuit to be analyzed by adding the output from the machine learning model according to the input of each of the several spatial distributions.

9. An information processing device, comprising:
an identification unit configured to identify, for an electronic circuit to be analyzed, a resonance frequency of a current and a spatial distribution of the current that flows through the electronic circuit to be analyzed at the resonance frequency;
a model generation unit configured to generate a machine learning model using a training data set in which arrangements of circuit elements in respective electronic circuits differ from each other, the training data set being a set of training data in each of which a specific value of a resonance frequency for a specific electronic circuit and information of a spatial distribution of a current that flows through the specific electronic circuit at the specific value of the resonance frequency are used as input data and an EMIof the specific electronic circuit is set as a label; and
an estimation unit configured to:
input, as input data, a frequency value of the identified resonance frequency and information of the identified spatial distribution to the generated machine learning model; and
estimate, for circuit design, an EMI of the electronic circuit to be analyzed, based on an output from the machine learning model according to the inputting.

10. The information processing device according to claim 9, wherein
the identification unit is configured to:
identify, as the resonance frequency, a frequency at which a maximum value of the spatial distribution of the current that flows through the electronic circuit to be analyzed is highest.

11. The information processing device according to claim 9 or 10, wherein
the identification unit is configured to:
identify the resonance frequency and the spatial distribution for the electronic circuit to be analyzed by using a circuit simulator.

12. The information processing device according to any one of claims 9 to 11, wherein
the estimation unit is further configured to:
divide the identified spatial distribution into several spatial distributions in accordance with configurations of respective circuit elements included in the electronic circuit to be analyzed;
input, as the input data, the value of the identified resonance frequency and each of the several spatial distributions to the machine learning model; and
estimate the EMIof the electronic circuit to be analyzed by adding the output from the machine learning model according to the input of each of the several spatial distributions.

13. The machine learning estimation program according to any one of claims 1 to 4, wherein
a far field of the estimated electromagnetic wave radiation in the electronic circuit to be analyzed is determined by an approximation field, and a near field of the estimated electromagnetic wave radiation is determined by the current flowing through the electronic circuit.

14. The machine learning estimation program according to any one of claims 1 to 4 and 13, further comprising:
creating a two-dimensional matrix in which a wiring pattern of the electronic circuit is colored based on the spatial distribution of the current in order to represent the EMI.

## Patentansprüche

1. Maschinenlern-Schätzungsprogramm, das einen Computer veranlasst, einen Prozess auszuführen, der Prozess umfassend:
Identifizieren einer Resonanzfrequenz eines Stroms und einer räumlichen Verteilung des Stroms, der durch eine zu analysierende elektronische Schaltung bei der Resonanzfrequenz fließt, für die zu analysierende elektronische Schaltung;
Erzeugen eines Maschinenlernmodells unter Verwendung eines Trainingsdatensatzes, in dem sich Anordnungen von Schaltungselementen in jeweiligen elektronischen Schaltungen voneinander unterscheiden, wobei der Trainingsdatensatz ein Satz von Trainingsdaten ist, in denen jeweils ein spezifischer Wert einer Resonanzfrequenz für eine spezifische elektronische Schaltung und Informationen über eine räumliche Verteilung eines Stroms, der bei der Resonanzfrequenz des spezifischen Werts durch die spezifische elektronische Schaltung fließt, als Eingabedaten verwendet werden und eine EMI der spezifischen elektronischen Schaltung als eine Kennzeichnung festgelegt ist;
Eingeben eines Frequenzwerts der identifizierten Resonanzfrequenz und von Informationen über die identifizierte räumliche Verteilung als Eingabedaten in das erzeugte Maschinenlernmodell; und
Schätzen einer EMI der zu analysierenden elektronischen Schaltung zur Schaltungsausgestaltung, basierend auf einer Ausgabe aus dem Maschinenlernmodell gemäß dem Eingeben.

2. Maschinenlern-Schätzungsprogramm nach Anspruch 1, wobei
das Identifizieren Identifizieren einer Frequenz als die Resonanzfrequenz einschließt, bei der ein Maximalwert der räumlichen Verteilung des durch die zu analysierende elektronische Schaltung fließenden Stroms am höchsten ist.

3. Maschinenlern-Schätzungsprogramm nach Anspruch 1 oder 2, wobei
das Identifizieren Identifizieren der Resonanzfrequenz und der räumlichen Verteilung für die zu analysierende elektronische Schaltung durch Verwenden eines Schaltungssimulators einschließt.

4. Maschinenlern-Schätzungsprogramm nach einem der Ansprüche 1 bis 3, der Prozess weiter umfassend:
Aufteilen der identifizierten räumlichen Verteilung in mehrere räumliche Verteilungen gemäß Konfigurationen jeweiliger Schaltungselemente, die in der zu analysierenden elektronischen Schaltung eingeschlossen sind,
wobei
das Eingeben Eingeben des Werts der identifizierten Resonanzfrequenz und jeder der mehreren räumlichen Verteilungen als die Eingabedaten in das Maschinenlernmodell einschließt, und
das Schätzen Schätzen der EMI der zu analysierenden elektronischen Schaltung durch Addieren der Ausgabe aus dem Maschinenlernmodell gemäß der Eingabe von jeder der mehreren räumlichen Verteilungen einschließt.

5. Maschinenlern-Schätzungsverfahren zum Analysieren elektronischer Schaltungen, das Maschinenlern-Schätzungsverfahren umfassend:
Identifizieren einer Resonanzfrequenz eines Stroms und einer räumlichen Verteilung des Stroms, der durch eine zu analysierende elektronische Schaltung bei der Resonanzfrequenz fließt, für die zu analysierende elektronische Schaltung durch einen Computer;
Erzeugen eines Maschinenlernmodells unter Verwendung eines Trainingsdatensatzes, in dem sich Anordnungen von Schaltungselementen in jeweiligen elektronischen Schaltungen voneinander unterscheiden, wobei der Trainingsdatensatz ein Satz von Trainingsdaten ist, in denen jeweils ein spezifischer Wert einer Resonanzfrequenz für eine spezifische elektronische Schaltung und Informationen über eine räumliche Verteilung eines Stroms, der bei der Resonanzfrequenz des spezifischen Werts durch die spezifische elektronische Schaltung fließt, als Eingabedaten verwendet werden und eine EMI der spezifischen elektronischen Schaltung als eine Kennzeichnung festgelegt ist;
Eingeben eines Frequenzwerts der identifizierten Resonanzfrequenz und von Informationen über die identifizierte räumliche Verteilung als Eingabedaten in das erzeugte Maschinenlernmodell; und
Schätzen einer EMI der zu analysierenden elektronischen Schaltung zur Schaltungsausgestaltung, basierend auf einer Ausgabe aus dem Maschinenlernmodell gemäß dem Eingeben.

6. Maschinenlern-Schätzungsverfahren nach Anspruch 5, wobei
das Identifizieren Identifizieren einer Frequenz als die Resonanzfrequenz einschließt, bei der ein Maximalwert der räumlichen Verteilung des durch die zu analysierende elektronische Schaltung fließenden Stroms am höchsten ist.

7. Maschinenlern-Schätzungsverfahren nach Anspruch 5 oder 6, wobei
das Identifizieren Identifizieren der Resonanzfrequenz und der räumlichen Verteilung für die zu analysierende elektronische Schaltung durch Verwenden eines Schaltungssimulators einschließt.

8. Maschinenlern-Schätzungsverfahren nach einem der Ansprüche 5 bis 7, weiter umfassend:
Aufteilen der identifizierten räumlichen Verteilung in mehrere räumliche Verteilungen gemäß Konfigurationen jeweiliger Schaltungselemente, die in der zu analysierenden elektronischen Schaltung eingeschlossen sind,
wobei
das Eingeben Eingeben des Werts der identifizierten Resonanzfrequenz und jeder der mehreren räumlichen Verteilungen als die Eingabedaten in das Maschinenlernmodell einschließt, und
das Schätzen Schätzen der EMI der zu analysierenden elektronischen Schaltung durch Addieren der Ausgabe aus dem Maschinenlernmodell gemäß der Eingabe von jeder der mehreren räumlichen Verteilungen einschließt.

9. Informationsverarbeitungsvorrichtung, umfassend:
eine Identifizierungseinheit, die dazu konfiguriert ist, für eine zu analysierende elektronische Schaltung eine Resonanzfrequenz eines Stroms und eine räumliche Verteilung des Stroms, der bei der Resonanzfrequenz durch die zu analysierende elektronische Schaltung fließt, zu identifizieren;
eine Modellerzeugungseinheit, die dazu konfiguriert ist, ein Maschinenlernmodell unter Verwendung eines Trainingsdatensatzes zu erzeugen, in dem Anordnungen von Schaltungselementen in jeweiligen elektronischen Schaltungen sich voneinander unterscheiden, wobei der Trainingsdatensatz ein Satz von Trainingsdaten ist, in denen jeweils ein spezifischer Wert einer Resonanzfrequenz für eine spezifische elektronische Schaltung und Informationen über eine räumliche Verteilung eines Stroms, der bei dem spezifischen Wert der Resonanzfrequenz durch die spezifische elektronische Schaltung fließt, als Eingabedaten verwendet werden und eine EMI der spezifischen elektronischen Schaltung als eine Kennzeichnung festgelegt ist; und
eine Schätzungseinheit, die konfiguriert zum:
Eingeben eines Frequenzwerts der identifizierten Resonanzfrequenz und von Informationen über die identifizierte räumliche Verteilung als Eingabedaten in das erzeugte Maschinenlernmodell; und
Schätzen einer EMI der zu analysierenden elektronischen Schaltung zur Schaltungsausgestaltung basierend auf einer Ausgabe aus dem Maschinenlernmodell gemäß dem Eingeben.

10. Informationsverarbeitungsvorrichtung nach Anspruch 9, wobei
die Identifizierungseinheit konfiguriert ist zum:
Identifizieren einer Frequenz als die Resonanzfrequenz, bei der ein Maximalwert der räumlichen Verteilung des durch die zu analysierende elektronische Schaltung fließenden Stroms am höchsten ist.

11. Informationsverarbeitungsvorrichtung nach Anspruch 9 oder 10, wobei
die Identifizierungseinheit konfiguriert ist zum:
Identifizieren der Resonanzfrequenz und der räumlichen Verteilung für die zu analysierende elektronische Schaltung durch Verwenden eines Schaltungssimulators.

12. Informationsverarbeitungsvorrichtung nach einem der Ansprüche 9 bis 11, wobei
die Schätzungseinheit weiter konfiguriert ist zum:
Aufteilen der identifizierten räumlichen Verteilung in mehrere räumliche Verteilungen gemäß Konfigurationen jeweiliger Schaltungselemente, die in der zu analysierenden elektronischen Schaltung eingeschlossen sind;
Eingeben des Werts der identifizierten Resonanzfrequenz und jeder der mehreren räumlichen Verteilungen als die Eingabedaten in das Maschinenlernmodell; und
Schätzen der EMI der zu analysierenden elektronischen Schaltung durch Addieren der Ausgabe aus dem Maschinenlernmodell gemäß der Eingabe von jeder der mehreren räumlichen Verteilungen.

13. Maschinenlern-Schätzungsprogramm nach einem der Ansprüche 1 bis 4, wobei
ein Fernfeld der geschätzten elektromagnetischen Wellenstrahlung in der zu analysierenden elektronischen Schaltung durch ein Näherungsfeld bestimmt ist und ein Nahfeld der geschätzten elektromagnetischen Wellenstrahlung durch den durch die elektronische Schaltung fließenden Strom bestimmt ist.

14. Maschinenlern-Schätzungsprogramm nach einem der Ansprüche 1 bis 4 und 13, weiter umfassend:
Erschaffen einer zweidimensionalen Matrix, in der ein Verdrahtungsmuster der elektronischen Schaltung basierend auf der räumlichen Verteilung des Stroms eingefärbt ist, um die EMI darzustellen.

## Revendications

1. Programme d'estimation par apprentissage automatique qui amène un ordinateur à exécuter un processus, le processus comprenant les étapes consistant à :
identifier, pour un circuit électronique à analyser, une fréquence de résonance d'un courant et une distribution spatiale du courant qui circule à travers le circuit électronique à analyser à la fréquence de résonance ;
générer un modèle d'apprentissage automatique à l'aide d'un ensemble de données d'apprentissage dans lequel les agencements des éléments de circuit dans les circuits électroniques respectifs diffèrent les uns des autres, l'ensemble de données d'apprentissage étant un ensemble de données d'apprentissage dans chacune desquelles une valeur spécifique d'une fréquence de résonance pour un circuit électronique spécifique et des informations sur une distribution spatiale d'un courant qui circule à travers le circuit électronique spécifique à la fréquence de résonance de la valeur spécifique sont utilisées comme données d'entrée et une EMI du circuit électronique spécifique est définie comme étiquette ;
entrer, en tant que données d'entrée, une valeur de fréquence de la fréquence de résonance identifiée et des informations sur la distribution spatiale identifiée dans le modèle d'apprentissage automatique généré ; et
estimer, pour la conception du circuit, une EMI du circuit électronique à analyser, sur la base d'une sortie du modèle d'apprentissage automatique en fonction de l'entrée.

2. Programme d'estimation par apprentissage automatique selon la revendication 1, dans lequel
l'identification inclut l'identification, comme fréquence de résonance, d'une fréquence à laquelle une valeur maximale de la distribution spatiale du courant qui circule à travers le circuit électronique à analyser est la plus élevée.

3. Programme d'estimation par apprentissage automatique selon la revendication 1 ou 2, dans lequel
l'identification inclut l'identification de la fréquence de résonance et de la distribution spatiale du circuit électronique à analyser à l'aide d'un simulateur de circuit.

4. Programme d'estimation par apprentissage automatique selon l'une quelconque des revendications 1 à 3, le processus comprenant en outre l'étape consistant à :
diviser la distribution spatiale identifiée en plusieurs distributions spatiales conformément aux configurations des éléments de circuit respectifs inclus dans le circuit électronique à analyser,
dans lequel
l'entrée inclut l'entrée, comme données d'entrée, de la valeur de fréquence de résonance identifiée et chacune des plusieurs distributions spatiales dans le modèle d'apprentissage automatique ; et
l'estimation inclut l'estimation de l'EMI du circuit électronique à analyser en ajoutant la sortie du modèle d'apprentissage automatique en fonction de l'entrée de chacune des différentes distributions spatiales.

5. Procédé d'estimation par apprentissage automatique pour analyser des circuits électroniques, le procédé d'estimation par apprentissage automatique comprenant les étapes consistant à :
identifier, par un ordinateur, pour un circuit électronique à analyser, une fréquence de résonance d'un courant et une distribution spatiale du courant qui circule à travers le circuit électronique à analyser à la fréquence de résonance ;
générer un modèle d'apprentissage automatique à l'aide d'un ensemble de données d'apprentissage dans lequel les agencements des éléments de circuit dans les circuits électroniques respectifs diffèrent les uns des autres, l'ensemble de données d'apprentissage étant un ensemble de données d'apprentissage dans chacune desquelles une valeur spécifique d'une fréquence de résonance pour un circuit électronique spécifique et des informations sur une distribution spatiale d'un courant qui circule à travers le circuit électronique spécifique à la fréquence de résonance de la valeur spécifique sont utilisées comme données d'entrée et une EMI du circuit électronique spécifique est définie comme étiquette ;
entrer, en tant que données d'entrée, une valeur de fréquence de la fréquence de résonance identifiée et des informations sur la distribution spatiale identifiée dans le modèle d'apprentissage automatique généré ; et
estimer, pour la conception du circuit, une EMI du circuit électronique à analyser, sur la base d'une sortie du modèle d'apprentissage automatique en fonction de l'entrée.

6. Procédé d'estimation par apprentissage automatique selon la revendication 5, dans lequel l'identification inclut l'identification, comme fréquence de résonance, d'une fréquence à laquelle une valeur maximale de la distribution spatiale du courant qui circule à travers le circuit électronique à analyser est la plus élevée.

7. Procédé d'estimation par apprentissage automatique selon la revendication 5 ou 6, dans lequel
l'identification inclut l'identification de la fréquence de résonance et de la distribution spatiale du circuit électronique à analyser à l'aide d'un simulateur de circuit.

8. Procédé d'estimation par apprentissage automatique selon l'une quelconque des revendications 5 à 7, comprenant en outre l'étape consistant à :
diviser la distribution spatiale identifiée en plusieurs distributions spatiales conformément aux configurations des éléments de circuit respectifs inclus dans le circuit électronique à analyser,
dans lequel
l'entrée inclut l'entrée, comme données d'entrée, de la valeur de fréquence de résonance identifiée et de chacune des plusieurs distributions spatiales dans le modèle d'apprentissage automatique ; et
l'estimation inclut l'estimation de l'EMI du circuit électronique à analyser en ajoutant la sortie du modèle d'apprentissage automatique en fonction de l'entrée de chacune des différentes distributions spatiales.

9. Dispositif de traitement d'informations, comprenant :
une unité d'identification configurée pour identifier, pour un circuit électronique à analyser, une fréquence de résonance d'un courant et une distribution spatiale du courant qui circule à travers le circuit électronique à analyser à la fréquence de résonance ;
une unité de génération de modèle configurée pour générer un modèle d'apprentissage automatique à l'aide d'un ensemble de données d'apprentissage dans lequel les agencements des éléments de circuit dans les circuits électroniques respectifs diffèrent les uns des autres, l'ensemble de données d'apprentissage étant un ensemble de données d'apprentissage dans chacune desquelles une valeur spécifique d'une fréquence de résonance pour un circuit électronique spécifique et des informations sur une distribution spatiale d'un courant qui circule à travers le circuit électronique spécifique à la fréquence de résonance de la valeur spécifique sont utilisées comme données d'entrée et une EMI du circuit électronique spécifique est définie comme étiquette ; et
une unité d'estimation configurée pour :
entrer, en tant que données d'entrée, une valeur de fréquence de la fréquence de résonance identifiée et des informations sur la distribution spatiale identifiée dans le modèle d'apprentissage automatique généré ; et
estimer, pour la conception du circuit, une EMI du circuit électronique à analyser, sur la base d'une sortie du modèle d'apprentissage automatique en fonction de l'entrée.

10. Dispositif de traitement d'informations selon la revendication 9, dans lequel
l'unité d'identification est configurée pour :
identifier, comme fréquence de résonance, une fréquence à laquelle une valeur maximale de la distribution spatiale du courant qui circule à travers le circuit électronique à analyser est la plus élevée.

11. Dispositif de traitement d'informations selon la revendication 9 ou 10, dans laquelle
l'unité d'identification est configurée pour :
identifier la fréquence de résonance et la distribution spatiale du circuit électronique à analyser à l'aide d'un simulateur de circuit.

12. Dispositif de traitement d'informations selon l'une quelconque des revendications 9 à 11, dans lequel
l'unité d'estimation est en outre configurée pour :
diviser la distribution spatiale identifiée en plusieurs distributions spatiales conformément aux configurations des éléments de circuit respectifs inclus dans le circuit électronique à analyser ;
entrer, comme données d'entrée, la valeur de fréquence de résonance identifiée et chacune des plusieurs distributions spatiales dans le modèle d'apprentissage automatique ; et
estimer l'EMI du circuit électronique à analyser en ajoutant la sortie du modèle d'apprentissage automatique en fonction de l'entrée de chacune des différentes distributions spatiales.

13. Programme d'estimation par apprentissage automatique selon l'une quelconque des revendications 1 à 4, dans lequel
un champ lointain du rayonnement électromagnétique estimé dans le circuit électronique à analyser est déterminé par un champ d'approximation, et un champ proche du rayonnement électromagnétique estimé est déterminé par le courant circulant dans le circuit électronique.

14. Programme d'estimation par apprentissage automatique selon l'une quelconque des revendications 1 à 4 et 13, comprenant en outre l'étape consistant à :
créer une matrice à deux dimensions dans laquelle un schéma de câblage du circuit électronique est coloré en fonction de la distribution spatiale du courant afin de représenter les EMI.
